# EUROPÄISCHE PATENTSCHRIFT

(11) **EP 1 855 916 B1**
(45) Veröffentlichungstag und Bekanntmachung des Hinweises auf die Patenterteilung: **21.04.2010**
(21) Anmeldenummer: 06722597.9
(22) Anmeldetag: 10.03.2006
(51) Int. Cl.: B60R 5/04, B60R 7/02

(54) **AUFNAHMEEINRICHTUNG, SOWIE KRAFTFAHRZEUG MIT EINER AUFNAHMEEINRICHTUNG**
RECEIVING DEVICE AND A MOTOR VEHICLE PROVIDED THEREWITH
DISPOSITIF DE RECEPTION, ET VEHICULE AUTOMOBILE EQUIPE D'UN DISPOSITIF DE RECEPTION

(30) Priorität: 11.03.2005 DE 102005011678
(43) Veröffentlichungstag der Anmeldung: 21.11.2007
(73) Patentinhaber: Webasto AG, 82131 Stockdorf (DE)
(72) Erfinder: LEROY, Alain, 86911 Diessen-Dettenschwang (DE); PSCHORN, Heinz, 85221 Dachau (DE); BRAUN, Robert, 82335 Berg (DE); LEGLER, Dirk, 86947 Weil (DE); KOELBL, Michael, 82061 Neuried (DE); VOGT, Oliver, 80796 München (DE); RUDOLPH, Thomas, 82229 Hechendorf (DE); JAKIMENCZUK, Thomas, 85635 Höhenkirchen (DE)
(74) Vertreter: Bosch, Matthias
(86) Internationale Anmeldenummer: PCT/DE2006/000440
(87) Internationale Veröffentlichungsnummer: WO 2006/094499

(56) Entgegenhaltungen:
- EP-A- 0 713 805
- EP-A- 0 761 503
- EP-A- 1 350 673
- WO-A-97/41755

## Beschreibung

Die vorliegende Erfindung betrifft eine Aufnahmeeinrichtung für ein Kraftfahrzeug gemäß dem Oberbegriff des Anspruchs 1, sowie ein Kraftfahrzeug mit einer Aufnahmeeinrichtung gemäß Anspruch 6.

Die WO 97/41755 A1 beschreibt eine Ablageanordnung, die an der Rückenlehne eines Fahrzeugs gelagert ist. Die Anordnung umfasst eine Ablage, die relativ zur Rückenlehne schwenkbar ist. Die Ablage kann so angepasst werden, dass auf ihrer Oberfläche Gegenstände aufbewahrt werden können, sie kann aber auch nach unten geschwenkt werden, um Gegenstände darunter aufzubewahren. Die Anordnung umfasst ein Frachtnetz zum Zurückhalten von losen Gegenständen. Wenn die Ablage nicht verwendet wird, kann sie zum Verstauen in den Sitz geklappt werden.

Eine Aufnahmeeinrichtung der zuvor genannten Art ist bereits aus der EP 0 761 503 A1 bekannt geworden. Hier wird ein Ablagefach, umfassend eine Hutablage und einen wannenförmigen Behälter beschrieben, wobei die Aufnahmeeinrichtung zwischen dem Laderaum und dem Fahrgastraum, etwa auf Höhe knapp unterhalb der Kopfstützen der Rücksitzbank, angebracht ist. In einem geschlossenen Zustand der Heckklappe liegt die Hutablage auf dem wannenförmigen Behälter auf und der Zugriff auf Gegenstände innerhalb des wannenförmigen Behälters ist sowohl aus dem Fahrgastraum als auch von Außerhalb des Kraftfahrzeuges verwehrt. In einem geöffneten Zustand der Heckklappe kann die Hutablage an die Heckklappe gekoppelt sein, so dass durch Öffnen der Heckklappe gleichermaßen die Hutablage angehoben wird und den Innenraum des wannenförmigen Behälters freigibt.

Eine derartige Aufnahmeeinrichtung ist jedoch mit Nachteilen behaftet. Insbesondere können die in dem wannenförmigen Behälter verstauten Gegenstände nicht während der Fahrt erreicht werden, da die Hutablage den Zugriff versperrt. Auch kann die Hutablage nicht abgenommen oder angehoben werden, da sie als formschlüssiges Element innerhalb einer passgenauen Aufnahme befestigt ist.

Hier setzt die vorliegende Erfindung an und macht es sich zur Aufgabe eine Aufnahmeeinrichtung der zuvor genannten Art bereitzustellen, wobei der Inhalt des wannenförmigen Behälters auch während der Fahrt erreichbar ist.

Erfindungsgemäß wird diese Aufgabe durch eine Aufnahmeeinrichtung mit den kennzeichnenden merkmalen des Anspruchs 1 gelöst.
Dadurch, dass die Hutablage zumindest abschnittsweise aus einem flexiblen Material besteht, kann die Hutablage in einer vorbestimmten Art und Weise verformt werden, so dass der Zugriff auf den Inhalt des wannenförmigen Behälters frei gegeben werden kann. Eine derartige Verformung ist bei einer Hutablage gemäß dem Stand der Technik nicht möglich, wodurch der Zugriff auf den Inhalt des wannenförmigen Behälters während der Fahrt bzw. bei geschlossener Heckklappe grundsätzlich nicht möglich ist.

Es ist vorgesehen, dass es sich bei dem Material der Hutablage um einen flächigen Textilkörper handelt. Ein flächiger Textilkörper vermag einerseits den wannenförmigen Behälter in einer angemessenen Weise zu verschließen und kann andererseits in gewünschter Weise verformt werden, so dass der Zugriff auf den Inhalt des wannenförmigen Behälters freigeben werden kann.

In einer vorteilhaften Ausgestaltung der vorliegenden Erfindung kann vorgesehen sein, dass die Hutablage zum Einrollen eingerichtet ist. Dementsprechend kann die Hutablage in vorteilhafter Weise in einen Bereich der Aufnahmeeinrichtung transportiert werden, so dass der Inhalt des wannenförmigen Behälters wahlweise verdeckt oder freigegeben werden kann. Auch kann die Hutablage in einem eingerollten Zustand in vorteilhafter Weise fixiert werden.

Alternativ bzw. ergänzend kann vorgesehen sein, dass die Hutablage zum Falten eingerichtet ist. Auch durch diese Maßnahme kann die Hutablage in einen Zustand überführt werden, bei dem das Innere des wannenförmigen Behälters freigegeben wird.

Auch kann alternativ bzw. ergänzend vorgesehen sein, dass die Hutablage zum Zusammenschieben eingerichtet ist. Auch durch diese Maßnahme kann während der Fahrt auf den wannenförmigen Behälter wahlweise zugegriffen werden.

In einer weiteren vorteilhaften Ausgestaltung der vorliegenden Erfindung kann vorgesehen sein, dass der wannenförmige Behälter eine Anzahl von Aufnahmefächern aufweist. Durch diese Maßnahme kann beispielsweise vermieden werden, dass kleine Gegenstände unkontrolliert innerhalb des wannenförmigen Behälters aufgenommen werden. Auch können unterschiedliche Parzellen, beispielsweise für Warndreieck, Verbandskasten etc. gebildet werden.

Eine weitere Aufgabe der vorliegenden Erfindung besteht darin, ein Kraftfahrzeug vorzuschlagen, welches auf vorteilhafte Art und Weise gegen das Eindringen von Abgasen bei geöffneter Heckklappe geschützt werden kann.

Zur Lösung dieser Aufgabe wird vorgeschlagen, dass das Kraftfahrzeug mit mindestens einer Aufnahmeeinrichtung gemäß einem der Ansprüche 1 bis 5 ausgestattet ist. Hierdurch ergibt sich die Möglichkeit, dass die Hutablage eine Doppelfunktion erfüllt, sowohl als Verschlussmittel für den wannenförmigen Behälter als auch als Schott gegen das Eindringen von Abgasen bei geöffneter Heckklappe. Hierzu kann vorgesehen sein, dass die Hutablage in geeigneter Weise aufgespannt werden kann.

In diesem Zusammenhang ist vorgesehen, dass die Hutablage dazu eingerichtet ist, in einem Bereich zwischen einem Dachhimmel, Fahrzeugseitenwänden und einer Rücksitzbank des Kraftfahrzeuges aufgespannt zu werden. Wird die Hutablage in der zuvor genannten Art und Weise aufgespannt, lässt sich eine maximale Abdichtung des Fahrzeuginnenraums gegen Abgase erreichen.

Hierzu kann vorteilhafterweise vorgesehen sein, dass die Hutablage mit Befestigungsmitteln ausgestattet ist, die mit korrespondierenden Befestigungsmitteln des Fahrzeuginnenraumes verbindbar sind.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine seitliche Schnittansicht auf ein Kraftfahrzeug mit einer erfindungsgemäßen Aufnahmeeinrichtung in einem Verschlusszustand;
- Fig. 2: eine seitliche Schnittansicht auf ein Kraftfahrzeug mit einer erfindungsgemäßen Aufnahmeeinrichtung in einem geöffneten Zustand (Hutablage ist eingerollt);
- Fig. 3: eine seitliche Schnittansicht auf ein Kraftfahrzeug mit einer erfindungsgemäßen Aufnahmeeinrichtung in einem Dichtungszustand der Hutablage (Hutablage ist im Fahrzeuginnenraum aufgespannt und verhindert das Eindringen von Abgasen).

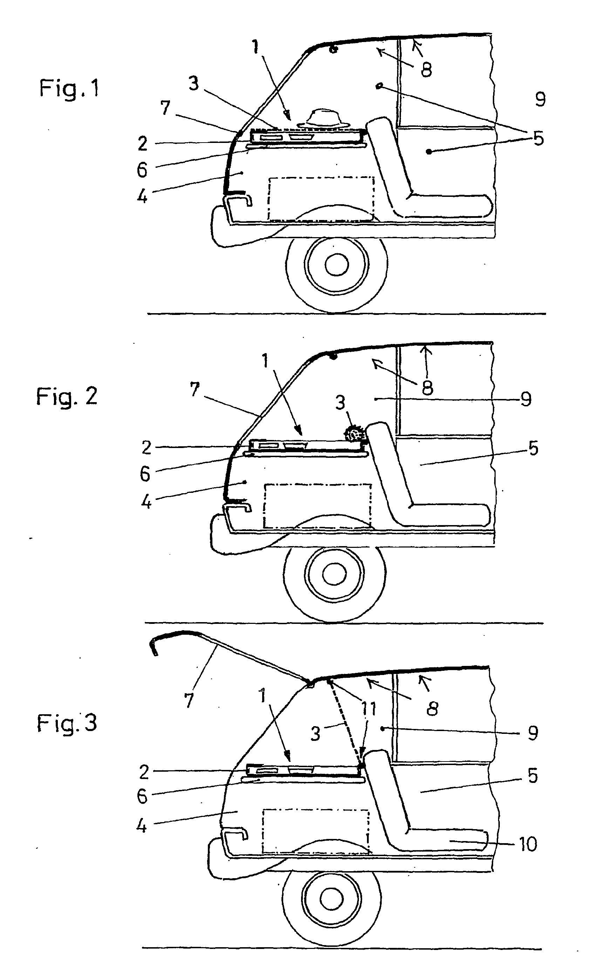

Zunächst wird auf Fig. 1 Bezug genommen.

Eine erfindungsgemäße Aufnahmeeinrichtung 1 umfasst im Wesentlichen einen wannenförmigen Behälter 2 sowie eine den wannenförmigen Behälter 2 wahlweise verschließende Hutablage 3.

Wie aus Fig. 1 ersichtlich ist die Aufnahmeeinrichtung 1 in einem Bereich zwischen einem Laderaum 4 und einem Fahrgastraum 5 eines Kraftfahrzeuges auf Höhe der sogenannten Brüstungslinie angeordnet. Zur Halterung der Aufnahmeeinrichtung 1 sind Vorsprünge 6 vorgesehen, wobei die Aufnahmeeinrichtung 1 grundsätzlich auf die Vorsprünge 6 aufgelegt und/oder um eine Schwenkachse (nicht dargestellt) verschwenkt werden kann. Es ist weiterhin eine Heckklappe 7 vorgesehen, die sich vorzugsweise sowohl über den Bereich des Laderaumes 4 als auch des Fahrgastraumes 5 erstreckt und vorzugsweise in vertikaler Richtung verschwenkt werden kann.

Erfindungsgemäß ist nunmehr vorgesehen, dass die Hutablage 3 zumindest abschnittsweise aus einem flexiblen Material besteht. Dementsprechend kann die Hutablage 3 in jeder Situation, insbesondere auch bei geschlossener Heckklappe 7 bzw. während der Fahrt vorzugsweise eingerollt oder gefaltet werden. Hierdurch wird der Zugriff auf den wannenförmigen Behälter 2 freigegeben, wodurch Gegenstände letztendlich auch bei geschlossener Heckklappe 7 bzw. während der Fahrt aus dem wannenförmigen Behälter 2 entnommen oder eingelegt werden können. Eine derartige Möglichkeit ergibt sich bei einer Aufnahmeeinrichtung gemäß dem Stand der Technik nicht, da die Hutablage aus einem nichtflexiblen Material besteht, welche nicht in der geforderten Art und Weise verformt werden könnte.

Die erfindungsgemäße flexible Hutablage 3 kann in einem geöffneten Zustand der Heckklappe 7 eine weitere Aufgabe erfüllen, indem die Hutablage 2 dazu eingerichtet ist in einem Bereich zwischen einem Dachhimmel 8, Fahrzeugseitenwänden 9 und dem oberen Ende einer Rücksitzbank 10 aufgespannt zu werden. Eine derart eingerichtete erfindungsgemäße Hutablage 3 kann das Eindringen von Abgasen in den Fahrgastraum 5 bei geöffneter Heckklappe 7 verhindern. Hierzu kann die Hutablage 3, sowie der Dachhimmel 8, die Fahrzeugseitenwände 9, sowie die Rücksitzbank 10 mit geeigneten lösbaren Befestigungsmitteln 11 ausgestattet sein.

## Patentansprüche

1. Aufnahmeeinrichtung (1) für ein Kraftfahrzeug, wobei die Aufnahmeeinrichtung (1) mindestens umfasst:
einen wannenförmigen Behälter (2), sowie eine Hutablage (3), wobei
die Hutablage (3) zur Abdeckung des wannenförmigen Behälters (2) eingerichtet ist, wobei
die Aufnahmeeinrichtung (1) zwischen einem Laderaum (4) und einem Fahrgastraum (5) des Fahrzeuges angeordnet werden kann,
**dadurch gekennzeichnet, dass**
die Hutablage (3) zumindest abschnittsweise aus einem flexiblen Material besteht wobei es sich bei dem Material um einen flächigen Textilkörper handelt, der dazu eingerichtet ist, in einem Bereich zwischen einem Dachhimmel (8), den Fahrzeugseitenwänden (9) und einer Rücksitzbank (10) des Kraftfahrzeuges aufgespannt zu werden.

2. Aufnahmeeinrichtung nach Anspruch 1, **dadurch gekennzeichnet, dass** die Hutablage (3) zum Einrollen eingerichtet ist.

3. Aufnahmeeinrichtung nach einem der vorhergehenden Ansprüche, **dadurch gekennzeichnet, dass** die Hutablage (3) zum Falten eingerichtet ist.

4. Aufnahmeeinrichtung nach einem der vorhergehenden Ansprüche, **dadurch gekennzeichnet, dass** die Hutablage (3) zum Zusammenschieben eingerichtet ist.

5. Aufnahmeeinrichtung nach einem der vorhergehenden Ansprüche, **dadurch gekennzeichnet, dass** der wannenförmige Behälter (2) eine Anzahl von Aufnahmefächern aufweist.

6. Kraftfahrzeug, **dadurch gekennzeichnet, dass** das Kraftfahrzeug mit mindestens einer Aufnahmeeinrichtung (1) gemäß einem der Ansprüche 1 bis 5 ausgestattet ist.

7. Kraftfahrzeug nach Anspruch 6, **dadurch gekennzeichnet, dass** die Hutablage (3) mit Befestigungsmitteln (11) ausgestattet ist.

## Claims

1. Receiving device (1) for a motor vehicle, the receiving device (1) comprising at least the following:
a trough-shaped container (2) and a parcel shelf (3), the parcel shelf (3) being set up for covering the trough-shaped container (2),
it being possible for the receiving device (1) to be arranged between a luggage compartment (4) and a passenger compartment (5) of the vehicle,
**characterized in that**
the parcel shelf (3) is composed at least in sections of a flexible material, the material being a flat textile element which is set up for being clamped in a region between a headlining (8), the vehicle side walls (9) and a rear seat bench (10) of the motor vehicle.

2. Receiving device according to Claim 1, **characterized in that** the parcel shelf (3) is set up for being rolled up.

3. Receiving device according to one of the preceding claims, **characterized in that** the parcel shelf (3) is set up for being folded.

4. Receiving device according to one of the preceding claims, **characterized in that** the parcel shelf (3) is set up for being pushed together.

5. Receiving device according to one of the preceding claims, **characterized in that** the trough-shaped container (2) has a number of receiving compartments.

6. Motor vehicle, **characterized in that** the motor vehicle is equipped with at least one receiving device (1) according to one of Claims 1 to 5.

7. Motor vehicle according to Claim 6, **characterized in that** the parcel shelf (3) is equipped with fastening means (11).

## Revendications

1. Dispositif de réception (1) pour un véhicule automobile, dans lequel le dispositif de réception (1) comprend au moins :
un récipient en forme de cuvette (2), ainsi qu'une plage arrière (3),
la plage arrière (3) étant prévue pour recouvrir le récipient en forme de cuvette (2),
le dispositif de réception (1) pouvant être disposé entre un espace de rangement (4) et un habitacle (5) du véhicule,
**caractérisé en ce que**
la plage arrière (3) se compose au moins en partie d'un matériau flexible, le matériau étant un corps textile en nappe, qui est prévu pour être tendu dans une région entre un plafond (8), les parois latérales du véhicule (9) et une banquette de siège arrière (10) du véhicule automobile.

2. Dispositif de réception selon la revendication 1, **caractérisé en ce que** la plage arrière (3) est prévue pour être enroulée.

3. Dispositif de réception selon l'une quelconque des revendications précédentes, **caractérisé en ce que** la plage arrière (3) est prévue pour être pliée.

4. Dispositif de réception selon l'une quelconque des revendications précédentes, **caractérisé en ce que** la plage arrière (3) est prévue pour être repliée sur elle-même.

5. Dispositif de réception selon l'une quelconque des revendications précédentes, **caractérisé en ce que** le récipient en forme de cuvette (2) présente une pluralité de compartiments de réception.

6. Véhicule automobile, **caractérisé en ce que** le véhicule automobile est muni d'au moins un dispositif de réception (1) selon l'une quelconque des revendications 1 à 5.

7. Véhicule automobile selon la revendication 6, **caractérisé en ce que** la plage arrière (3) est munie de moyens de fixation (11).
